(19) Europäisches Patentamt

European Patent Office

Office européen des brevets

(11) Veröffentlichungsnummer: **0 465 712 A1**

# (12) EUROPÄISCHE PATENTANMELDUNG

(21) Anmeldenummer: **90113396.7**

(22) Anmeldetag: **13.07.90**

(51) Int. Cl.⁵: **E04C 2/34**

(43) Veröffentlichungstag der Anmeldung:
**15.01.92 Patentblatt 92/03**

(84) Benannte Vertragsstaaten:
**AT BE CH DE DK ES FR GB GR IT LI LU NL SE**

(71) Anmelder: **Rigips GmbH
Rühler Strasse
W-3452 Bodenwerder(DE)**

(72) Erfinder: **Meyer, Günter
über dem Born 17
W-3452 Hehlen(DE)**
Erfinder: **Steinacher, Peter
Roseggerstrasse 29
W-4000 Düsseldorf 30(DE)**
Erfinder: **Pfefferman, Doris
Auerstrasse 17
W-5000 Köln 60(DE)**
Erfinder: **Völkner, Rainer
Bachstrasse 30
W-5860 Iserlohn Letmathe(DE)**

(74) Vertreter: **Rücker, Wolfgang, Dipl.-Chem.
Patentanwalt
Bergiusstrasse 2b
W-3000 Hannover 51(DE)**

(54) **Trockenbauwand unter Verwendung von Gispkartonplatten.**

㊽ Beschrieben wird eine Trockenbauwand, die aus einer tragenden metallischen Unterkonstruktion in Form von trapezförmigen Blechen besteht, die ganzflächig d. h. in der Größe der Wand sich erstrecken unter den beidseitig aufgebrachten Beplankungen aus Gipskartonplatten oder Gipsplatten in einer oder mehreren Lagen.

EP 0 465 712 A1

Die Erfindung betrifft eine Trockenbauwand unter Verwendung von Gipskartonplatten oder anderen Gipsplatten.

Es ist bekannt, daß Gipskartonplatten oder Gipsplatten mit einem Gehalt an bewährenden Fasern zur Herstellung von Trennwänden im Trockenbau eingesetzt werden.

Gipskartonplatten oder Gipsplatten überhaupt haben den großen Vorteil im Gegensatz zu anderen Baustoffen, daß sie großflächig verarbeitbar sind, sich physikalischen Anforderungen leicht anpassen lassen, ja das sogar nachträglich Änderungswünsche, wie sie oft erst im Bauablauf geäußert werden, kaum Schwierigkeiten bereiten.

Ein weiterer hoch einzuschätzender Vorteil liegt in dem geringen Gewicht von 30-70 kg qm$^2$, je nach Systemtyp.

Schließlich darf nicht unerwähnt bleiben, daß die Gipskartonplattentrockenbauweisebesonders installationsfreudig ist. In dem Hohlraum zwischen den Beplankungen können Verund Entsorgungsleitungen in Doppelständerwänden auch groß dimensionierter Einrichtungen eingebracht werden.

Ein besonders hoch einzuschätzender Vorteil der Trockenbauweise unter Verwendung von Gipskartonplatten oder Gipsplatten ist der Bandschutz, den man mit solchen Systemen erreicht.

Nach DIN 4102 gelten Gipskartonplatten bzw. Gipsplatten als schwer entflammbar bzw. nicht brennbar und werden mit Vorteil für die Feuerwiederstandsklassen nach DIN 4102, je nach Beplankung und Unterkonstruktion, eingesetzt.

Eine einlagige Beplankung mit einer Gipskartonplatte von 12,5 mm Dicke erfüllt die Bedingung der Feuerwiederstandsklasse F 30 a. Bei einer Montagewand mit 3 Platten zu 12,5 mm Dicke wird die Feuerwiederstandsklasse F 180 a bei Wänden mit Metallständern erreicht. Die Feuerschutzwirkung der Gipskartonplatte ist ein hervorragendes Merkmal, das entsprechend der Wahl der Unterkonstruktion universell anwendbar ist. Auch zur Verkleidung von Ständerwerk, beispielsweise aus Metall oder Holz, eignet sich die Gipskartonplatte vorzüglich.

Aufgabe der vorliegenden Erfindung ist es nun, eine Ausgestaltung für die Trockenbauweise zu entwickeln, die eine besonders hohe Stabilität in ihrer Unterkonstruktion aufweist und Stoßbelastungen elastisch aufnimmt, örtlich oder ganzflächig verstärkbar ist und sich auch zur Anbringung einer überdimensionalen Beplankung eignet (Böker, "Trockenbaupraxis mit Gipskartonplatten-Systemen", Köln-Braunsfeld: R. Müller, 1983).

Gelöst wird dies dadurch, daß die die Beplankung tragende Unterkonstruktion sich über die ganze Fläche der Wand erstreckenden Metallbleche besteht, daß im Querschnitt Trapez bzw. einer abgewandelten Trapezform aufweist.

In Verfolg des Erfindungsgedankens kann das Trapezprofil des Bleches mit Gurtsicken oder Stegsicken versehen sein oder sowohl mit Gurtsicken als auch mit Stegsicken. Das Trapez kann auch so variert sein, daß zwischen aufeinanderfolgenden Trapezen schwalbenschwanzförmige Profillierungen angeordnet sind, in dem von den Stegen weglaufenden Seitenwand des Trapezes konvengierend verlaufend. Auch dieses Profil kann wieder mit Sikken versehen sein.

Die trapezförmigen Profillierungen des Bleches können gleichmäßige Abstände oder gleichmäßige Längen zwischen den aufeinanderfolgenden Trapezen aufweisen, so daß die Stege immer gleichlang sind oder unterschiedliche Längen aufweisen, der Art, daß ein Trapez mit langem Steg solchem Trapez mit kurzem Steg abwechselt. Dabei ist es möglich an besonders riskanten Stellen wo z.B. Stoßbelastungen auftreten können, in ausgewählte Trapeze Verstärkungen eingebracht werden, die sich einmal auf dem Grund des Steges des Trapezes abstützen, zum anderen gegen die innere Oberfläche der Platte der Beplankung.

Solche Verstärkungen sind sowohl durch Einarbeiten von streifenförmigen Gipskartonplattenstücken oder mit Blechprofilen geeigneter Dimensionierung herstellbar.

Die Dicke des Bleches mit den trapezförmigen Profillierungen beträgt zwischen 0,5 und 2 mm. Die Profilhöhe kann bis zu 150 mm betragen. Die Verbindung der profillierten Bleche untereinander kann durch Nieten, Schrauben oder Schweißen, oder durch Steck- bzw. Klemmverbindungen erfolgen. Die Befestigung der Beplankung geschieht durch übliche Weise durch Verwendung von Blechschrauben.

Zusätzlich zu den oben geschilderten Verstärkungen des oder der tragenden Profilfläche können flache Stahlbleche ebenfalls verwendet werden.

Die Erfindung wird nun anhand von Ausführungsbeispielen erläutert, die in der Zeichnung dargestellt sind.

Es stellen dar:

Fig. 1:      einen Horizontalschnit durch einen Teil einer Erfindungsgemäßen Wand und

Fig. 2:      weitere Wandkonstruktionen, die mit a - c bezeichnet sind ebenfalls im Horizontalschnitt

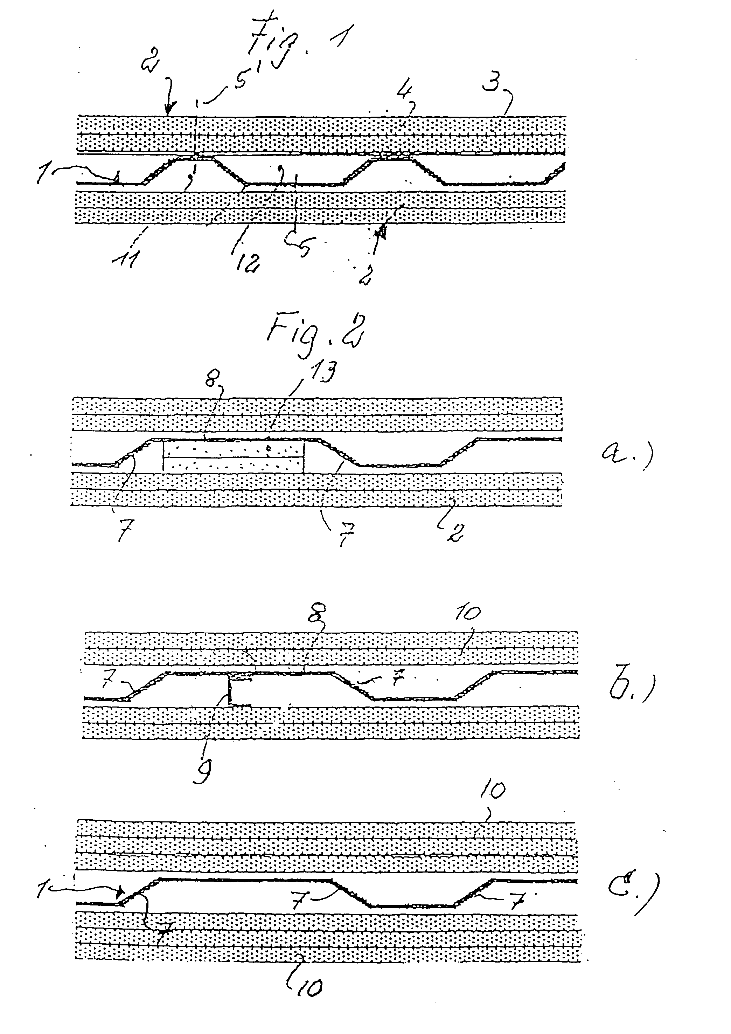

In Fig. 1 bezeichnet das Bezugszeichen 1 die Unter- bzw. Drahtkonstruktion der Wand, die aus einem trapezförmigen profillierten Blech besteht, dessen Abmessungen in praktischen Grenzen liegen, d. h. daß das Blech noch handhabbar bzw. verarbeitbar sein sollte.

Das Blech kann ähnliche Abmessungen haben wie die Gipskartonplatte. Es hat eine Stärke von 0,5 bis 2 mm je nach der Art der herzustellenden Wand. Einzelne Bleche können durch Schweißen, Schrauben oder Nieten gegeneinander stoßen und miteinander verbunden werden. Es können an den Rändern zusätzliche Profilierungen gebildet sein, die Steck- bzw. Klemmverbindungen ergeben.

Je nach Art der herzustellenden Verbindung, entweder stumpft aneinander gestoßen oder überlappt kann die Verbindung gewährt werden. Zur Erhöhung der Steifigkeit oder der Festigkeit schlechthin können Stege, Gurte oder Flansche des trapezförmigen Grundprofils mit Sicken versehen sein.

In Fig. 1 ist mit 3 ein Blech bezeichnet, daß auf den Stegen der trapezförmigen Profilierung aufliegt, wie bei 4 zu sehen ist und damit verbunden sein kann.
Ein solchermaßen ergänztes trapezförmiges Profil kann während der Montage der Wand hergestellt werden oder schon fertigungsseitig beispielsweise durch Punktschweißen an der trapezförmigen Profilierungen befestigt sein.

Die Befestigung der Gipskartonplatte 2 in ein- oder mehrlagiger Anordnung erfolgt in an sich bekannter Weise. Vorzugsweise durch Blechschrauben wie das beispielsweise bei 5 durch die gestrichelte Linie angedeutet ist. Die Befestigung der Gipskartonplatten an den Profilblech kann über jeden Steg oder unter Auslassung eines Steges, über jeden zweiten Steg erfolgen.

Die Befestigung 5' würde auch bei montageseitiger Aufbringung des Bleches 3 das Blech zu dem Trapezblech (1) halten.

In Fig. 2 sind weitere Möglichkeiten der Montage der Erfindung gemäß Wand dargestellt. Es zeigt Fig. 2 a ein zusätzliches Gipskartonplattenstreifenbündel 6, daß zur Aussteifung des Abschnittes der Gipskartonplattenbeplankung dient, der im Bereich zwischen den Flanschen 7 des speziellen Trapezes 8 liegt.

In Fig. 2 b ist die Aussteifung innerhalb des Bereiches der Beplankung zwischen den Flanschen 7 des Trapezes 8 durch ein zusätzliches Profil im vorliegenden Falle durch ein U-Profil 9 bewirkt und Fig. 2 c zeigt eine besonders starke dimensionierte Beplankung des als Ständer oder Unterkonstruktion dienenden Profilbleches.
Diese Beplankung ist mit dem Bezugszeichen 10 bezeichnet und besteht aus drei Lagen Gipskartonplatten.
Wenngleich im vorliegenden Falle meistens von Gipskartonplatten als Beplankungsart gesprochen ist, so können natürlich auch reine Gipsplatten verwendet werden oder Gipskartonplatten in Verbindung mit Gipsplatten. Es kann auch z. B. die innere Lage aus Gipsplatten bestehen, die durch Fasern arnuiert sind und die äußere Lage aus Gipskartonplatten oder umgekehrt.

In den Fig. 1 und 2 sind die trapezförmigen Profillierungen in dem Blech ungleichmäßig breit. So ist in Fig. 1 das trapezförmige Profil 11 in seiner Stegbreite kleiner als das darneben liegende Trapez 12.

Es ist jedoch auch möglich ein Blech zu verwenden, in welchem gleichmäßig breite Trapeze eingearbeitet sind. So wie es auch möglich ist, kleine Trapeze in einer bestimmten Anzahl folgen zu lassen, an die sich dann Trapeze größeren, breiteren Profils anschließen, die wieder in einer bestimmten Anzahl aufeinander folgen.

Auf folgendes sei noch hingewiesen:

Statt der Gipskartonplatten, die in den meisten Fällen als Beplankung verwendet werden, können natürlich auch andere Platten zum Einsatz kommen, wie z. B. reine Gipsplatten mit Faserarmierungen oder Kalziumsilikatplatten, also Platten die der Baustoffgruppe A oder B1 zuzurechnen sind.

Die trapezförmigen Profilierungen, deren Öffnungen abwechselnd zur einen und zur anderen Seite hinweisen, verlaufen parallel zueinander, wenn installiert, vorzugsweise senkrecht.

Sie können durchweg gleiche Breite haben und gleiche Neigung der Flansche unter Berücksichtigung des Steges der diese verbindet. Sie können aber auch ungleich breit sein.

Ebenso können, wie in den Zeichnungen dargestellt, die trapezförmigen Profilierungen großer Breite mit solchen mit kleiner Breite abwechseln. Das in Fig. 2b gezeigte Verstärkungsprofil U-förmigen Querschnitts mit Bezugszeichen 9 besitzt eine solche Breite, daß es genau in den Hohlraum des Trapezes der Platte (1) paßt und sich dabei mit der nach außen weisenden Oberfläche seiner Flansche auf das Blech und zum anderen auf die zugekehrte Oberfläche der Beplankung abstützt.

Anstelle eines solchen Profiles 9 können auch Gipskartonplattenstreifen (13) oder andere Materialien, der hier in Frage kommenden Materialklassen eingefügt werden, die dann in ihrer Dicke mit Abstand vom Grund des Steges des Trapezes bis zur zugekehrten Oberfläche der Beplankung entsprechen müssen.

**Patentansprüche**

1. Trockenbauwand unter Verwendung von Gipskarton- und reinen Gipsplatten mit einer Tragkonstruktion aus Blech **dadurch gekennzeichnet,** daß die Tragkonstruktion aus großflächigen Blechen (1) mit parallel zueinander verlaufenden gleichen Breiten oder unterschiedlichen Breiten trapezförmigen Profillierungen (11, 12) besteht.

2. Trockenbauwand nach Anspruch 1 **dadurch gekennzeichnet,** daß die mit Profilierung (11 oder 12 oder 11 und 12) versehenen Bleche

(1) in ihrer Größer der Größe normaler Gipskartonplatten entspricht.

3. Trockenbauwand nach Anspruch 1 und 2 **dadurch gekennzeichnet,** daß die Stege (8) oder die Flanschen (7) mit sickenförmigen Profillierungen versehen sind.

4. Trockenbauwand nach Anspruch 1 bis 3 **dadurch gekennzeichnet,** daß zur zusätzlichen Aussteifung auf den profillierten Blechen (1) ein oder beidseitig auf die Stege der trapezförmigen Profillierung entsprechend große Bleche (3) aufgelegt und mit dem profillierten Blech (1) verbunden sind.

5. Trockenbauwand nach Anspruch 1 bis 4 **dadurch gekennzeichnet,** daß in die durch die trapezförmigen Profillierung gebildeteten Vertiefungen des Bleches Metallprofille (9) eingelegt sind, die der Tiefe der Profillierung (11 bzw. 12) entsprechen und sich ihren nach außen weisenden aneinander gegenüberliegenden Flächen auf die Beplankung bzw. auf die zugekehrte Oberfläche des Steges (8) des Bleches (1) abstützen. (Fig. 2)

6. Trockenbauwand nach Anspruch 1 bis 5 **dadurch gekennzeichnet,** daß sie ein- oder beidseitig, ein- oder mehrlagig mit Gipsbauplatten im weitesten Sinne oder anderen Bauplatten der Klasse A oder B1 beplankt sind.

Fig. 1

Fig. 2

a.)

b.)

c.)

**Europäisches Patentamt**

# EUROPÄISCHER RECHERCHENBERICHT

Nummer der Anmeldung

**EP 90 11 3396**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 716 407  (R. SCHMIDT-LUTZ)<br>* Seiten 3-7 *<br>– – – | 1,6 | E 04 C 2/34 |
| X | FR-E-43 761  (M.P. DEUX)<br>* ganzes Dokument *<br>– – – | 1,6 | |
| A | GB-A-926 829  (A. VERDUN)<br>* ganzes Dokument *<br>– – – | 1,3,4 | |
| A | FR-A-1 160 825  (SOCIETE D'ETUDES ET DE RECHER-CHES TECHNIQUES)<br>* ganzes Dokument *<br>– – – | 1,4,5 | |
| A | FR-A-1 191 945  (M.G.-M. COUSY)<br>* ganzes Dokument *<br>– – – | 1,3,4 | |
| A | FR-A-1 440 387  (SIEMAG SIEGENER MASCHINENBAU G.M.B.H.)<br>* ganzes Dokument *<br>– – – – – | 1,4 | |

| RECHERCHIERTE SACHGEBIETE (Int. Cl.5) |
|---|
| E 04 C |

Der vorliegende Recherchenbericht wurde für alle Patentansprüche erstellt

| Recherchenort | Abschlußdatum der Recherche | Prüfer |
|---|---|---|
| Berlin | 08 März 91 | PAETZEL H-J |